# FASCICULE DE BREVET EUROPEEN

(11) **EP 4 158 872 B1**
(45) Date de publication et mention de la délivrance du brevet: **30.09.2026**
(21) Numéro de dépôt: 21733486.1
(22) Date de dépôt: 20.05.2021
(51) Int. Cl.: H04L 9/40, H04L 67/568, H04L 67/5681

(54) **PROCEDE DE DELEGATION DE LA LIVRAISON DE CONTENUS A UN SERVEUR CACHE**
VERFAHREN ZUR DELEGIERUNG DER LIEFERUNG VON INHALTSELEMENTEN AN EINEN CACHE-SERVER
METHOD FOR DELEGATING THE DELIVERY OF CONTENT ITEMS TO A CACHE SERVER

(30) Priorité: 25.05.2020 FR 2005481
(43) Date de publication de la demande: 05.04.2023
(73) Titulaire: Orange, 92130 Issy-les-Moulineaux (FR)
(72) Inventeur: FIEAU, Frédéric, 92326 CHÂTILLON CEDEX (FR); STEPHAN, Emile, 92326 CHÂTILLON CEDEX (FR); FROMENTOUX, Gaël, 92326 CHÂTILLON CEDEX (FR)
(74) Mandataire: Vidon Brevets & Stratégie
(86) Numéro de dépôt international: PCT/FR2021/050904
(87) Numéro de publication internationale: WO 2021/240098

(56) Documents cités:
- US-A1- 2003 140 257
- US-A1- 2019 372 943

## Description

### Domaine de l'invention

Le domaine de l'invention est celui de la livraison de contenus à au moins un terminal.

Plus particulièrement, l'invention concerne une méthode de « *caching* » de flux de données relatifs à des contenus, encore appelé « *transparent caching* », en vue de leur livraison à au moins un terminal.

### Art antérieur et ses inconvénients

Le chiffrement de bout en bout (en anglais, *End-to-end encryption* ou *E2EE*) est une technique utilisée dans les systèmes de communication où seuls les équipements de communication ayant établi une connexion entre eux peuvent accéder au contenu de certaines données transmises au moyen de la connexion, les données utiles à l'acheminement pouvant être non chiffrées.

Les systèmes de chiffrement de bout en bout sont conçus pour résister à toute tentative de surveillance ou de modification des données, car aucun tiers ne peut déchiffrer, et donc accéder aux données ainsi communiquées s'il ne possède pas les clés de sécurité utilisées pour le chiffrement et le déchiffrement.

Ainsi, le contenu des messages transmis à l'équipement de communication destinataire est chiffré localement par l'équipement de communication émetteur avant même que les messages soient envoyés au travers de la connexion, établie sur un chemin de communication comprenant des équipements intermédiaires. Ces équipements intermédiaires, de type « *middlebox* » par exemple, ne font que relayer les messages chiffrés, à partir des données d'acheminement non chiffrées, et c'est l'équipement de communication destinataire qui déchiffre le message. La transaction est ainsi sécurisée indépendamment de l'équipement intermédiaire qui, lui, pourrait être compromis. Le chiffrement de bout-en-bout est devenu une pratique qui se généralise de plus en plus sur l'Internet.

L'avènement de ce type de solutions a mis fin à l'utilisation de deux méthodes de « *caching* » qui consistaient à répliquer et stocker des données relatifs à des contenus, tels que des pages web ou des contenus multimédia, depuis un « *cache* » embarqué dans un ou plusieurs équipements intermédiaires.

Une première méthode, dite « *cache explicite* » est principalement mise en œuvre dans des proxy d'entreprises.

Dans une telle méthode, un proxy d'entreprise, par exemple, stocke des contenus fréquemment consultés ou téléchargés par des employés puis sert ce contenu directement à partir de l'une de ses mémoires « *cache* » sans demander à nouveau le contenu au serveur de contenus.

Une deuxième méthode, dite « *cache transparent* », est, quant à elle, généralement mise en œuvre par un équipement d'un réseau communication intermédiaire qui relaie les paquets entre des terminaux et des serveurs d'origine des contenus . Un tel « cache » identifie, parmi l'ensemble des requêtes en demandes de contenu traitées, les requêtes relatives à des contenus populaires, par exemple les contenus les plus demandés et/ou les plus volumineux, et stocke une copie de ces contenus. Le « cache » traite ensuite les requêtes relatives à ces contenus, émanant de terminaux utilisateurs, en se substituant partiellement au terminal requérant le contenu et partiellement au serveur fournissant les données relatives au contenu requis, afin de relayer les données de signalisation habituellement échangées entre le terminal et le serveur telles que des données de signalisation de type entêtes http, cookies, contrôle d'accès, etc. et de livrer ces contenus directement à partir de l'une de ses mémoires « *cache* ».

US2003/140257A1 divulgue une méthode de stockage des contenus dans un cache réseau utilisant un service centralisé de gestion de clés.

Cependant, la disparition de ces solutions de « *cache explicite* » et de « *transparent caching* » impacte la gestion des ressources des différents équipements de communication notamment en induisant une augmentation du nombre de connexions et des débits entre équipements de communication nécessaire à la livraison de contenus aux terminaux utilisateurs.

Il existe donc un besoin d'une technique ne présentant pas de tels inconvénients.

### Exposé de l'invention

L'invention concerne un procédé de livraison d'au moins un contenu à destination d'au moins un terminal, ledit procédé étant mis en œuvre par un serveur cache, auquel peut accéder ledit au moins un terminal (10), et comprenant :
une première phase au cours de laquelle les étapes suivantes sont mises en œuvre :
   - enregistrement d'une séquence de messages échangés entre le serveur cache et un serveur d'origine hébergeant le contenu au cours d'une session de communication établie avec le serveur d'origine associé audit contenu et au cours de laquelle ledit contenu est délivré ,
une deuxième phase au cours de laquelle les étapes suivantes sont mises en œuvre:
   - réception d'une demande d'accès audit contenu émise par le terminal,
   - en réponse à ladite demande d'accès audit contenu, rejeu, avec ledit terminal, de la séquence de messages enregistrée, résultant en la livraison dudit contenu.

Une telle solution permet à un terminal souhaitant accéder à un contenu de pouvoir accéder à ce dernier notamment lorsque le serveur d'origine hébergeant le contenu n'est pas ou plus connecté à un réseau de communication.

En délégant la livraison de contenus à des serveurs cache, il est possible de réduire les coûts liés à l'exécution de cette fonction de livraison de contenus. En effet, en déléguant la livraison de contenus à un serveur cache il est possible de réduire le nombre de connexions entre équipements de communication afin de livrer de contenus, notamment en réutilisant les connections existantes entre les équipements utilisateur et les serveurs cache. Une telle réduction du nombre de connexions entre équipements de communication entraine une réduction de la consommation énergétique de ces équipements de communication

Contrairement aux techniques de "caching" connues dans lesquelles le contenu en lui-même est stocké dans au moins une mémoire cache d'un serveur cache, la solution proposée repose sur le stockage dans le serveur cache d'une copie à l'identique de l'ensemble des messages échangés entre le serveur d'origine hébergeant le contenu et le serveur cache conduisant à la livraison du contenu au serveur cache.

Contrairement aux techniques de "transparent caching" le rejeu peut être réalisé vers plusieurs terminaux en même temps dans une même connexion point à multipoint dite IP multicast.

Ainsi, lorsqu'un terminal souhaite accéder à un contenu donné, le serveur cache rejoue avec le terminal la séquence de messages précédemment échangés entre le serveur d'origine hébergeant le contenu et le serveur cache ayant conduit à la livraison du contenu au serveur cache. Le terme rejeu consiste en la répétition, par le serveur cache et avec le terminal, de la séquence de messages échangés entre le serveur d'origine et le serveur cache lors du téléchargement du contenu requis, les messages rejoués pouvant, en cas de besoin, être modifiés pour s'adapter au contexte dans lequel ils sont rejoués.

Une telle solution de délégation de livraison de contenus présente également des performances accrues. Cela tient au fait que le nombre de connexions établies entre équipements de communication afin de livrer un contenu.

Enfin, la solution livraison de contenus proposée est fiable. En effet, dans le cadre du procédé de livraison de contenus décrit, un serveur cache mettant en œuvre une livraison de contenus est doté d'une autorisation d'exécution de cette fonction de livraison de contenus qui peut être vérifiée le cas échéant.

Dans une implémentation du procédé de livraison objet de l'invention, celui-ci comprend suite à la réception d'une demande d'accès audit contenu, la transmission à destination du terminal d'un message comprenant au moins un paramètre, dit paramètre de délégation, relatif à une autorisation de livraison dudit contenu par ledit serveur cache.

Le paramètre de délégation est généré par un serveur d'origine associé au contenu à livrer et est propre à chaque serveur cache auprès duquel une fonction de résolution d'un identifiant de nommage est déléguée. Ainsi, seul un serveur cache autorisé par un serveur d'origine associé à un contenu à livrer se voit déléguer la livraison de ce contenu.

Dans une implémentation du procédé de livraison objet de l'invention, une partie des messages échangés entre le serveur *cache* et le serveur d'origine comprennent des informations protocolaires relatives à la signalisation et/ou au contrôle de ladite séquence de messages enregistrés. Dans une implémentation du procédé de livraison objet de l'invention, celui-ci comprend préalablement au rejeu de la séquence de messages enregistrée, une étape de modification d'au moins l'un des messages de ladite séquence de message enregistrée au moyen desdites informations protocolaires.

Pour cela, le serveur cache modifie certains des messages mémorisés afin de les adapter aux points d'émission/réception, c'est-à-dire le serveur cache et le terminal, s'ils sont différents de ceux du jeu de messages initial, c'est-à-dire s'ils sont différents des messages échangés entre le serveur d'origine et le serveur cache lors du téléchargement du contenu requis. Pour cela, le serveur cache procède à ces modifications sur la base des informations protocolaires générées par le serveur d'origine.

De telles modifications des messages peuvent être effectuées par le serveur cache soit avant le rejeu de la séquence de messages soit au fil de l'eau pendant le rejeu des messages.

Dans une implémentation du procédé de livraison objet de l'invention, celui-ci comprend une étape d'émission d'informations protocolaires supplémentaires vers le terminal.

De telles informations protocolaires supplémentaires concernent des valeurs à appliquer aux messages identifiés dans les informations protocolaires lors de leur modifications. Les informations protocolaires supplémentaires sont générées par le serveur cache en fonctions d'informations reçues en provenance du terminal. Ainsi, si les informations protocolaires peuvent être communes à plusieurs terminaux, les informations protocolaires supplémentaires sont propres au terminal.

Dans une implémentation du procédé de livraison objet de l'invention, l'étape de modification d'au moins un des messages de la séquence est déclenchée par la réception d'une requête de rejeu émise par le terminal.

Dans une implémentation du procédé de livraison objet de l'invention, celui- comprend préalablement à l'étape de transmission du paramètre de délégation, une étape de réception d'un message comprenant le paramètre de délégation

Dans une implémentation particulière du procédé, le message reçu est émis par ledit serveur d'origine associé au contenu à livrer.

Ainsi le serveur d'origine associé à un contenu à livrer transmet directement le paramètre de délégation au serveur cache. Cela permet de réduire la durée de livraison des contenus tout en réduisant le nombre de connexions entre équipements.

Dans cette implémentation, un résolveur d'identifiants de nommage sensé résoudre un identifiant de nommage particulier relaie un message, transmis par le serveur d'origine associé au contenu à livrer et comprenant le paramètre de délégation, au serveur cache concerné. Dans cette implémentation, le résolveur d'identifiants de nommage sensé résoudre un identifiant de nommage particulier est ainsi informé de la délégation de la livraison du contenu en question.

L'invention concerne encore un procédé d'accès à un contenu, ledit procédé étant mis en œuvre par un terminal et comprenant les étapes suivantes :
- émission d'une demande d'accès audit contenu à destination d'un serveur cache au niveau duquel ledit contenu est mémorisé,
- rejeu, avec ledit serveur cache, d'une séquence de messages échangés entre le serveur cache (13) et un serveur dit d'origine associé audit contenu au cours d'une session de communication établie entre le serveur cache et le serveur d'origine au cours de laquelle ledit contenu est délivré auprès du serveur cache, ladite séquence de messages ayant été enregistrée par ledit serveur cache, résultant en la livraison dudit contenu auprès du terminal.

Le terminal reçoit le paramètre de délégation du serveur cache lors de l'établissement d'une session de communication avec ce dernier.

Dans une implémentation du procédé d'accès objet de l'invention, celui-ci comprend préalablement à l'étape de rejeu, une étape de réception d'un message, émis par un serveur dit cache, comprenant au moins un paramètre, dit paramètre de délégation, relatif à une autorisation d'exécution par ledit serveur cache d'une fonction de livraison dudit contenu.

Dans une implémentation du procédé d'accès objet de l'invention, une partie des messages échangés entre le serveur *cache* et le serveur d'origine des informations protocolaires relatives à la signalisation et/ou au contrôle de ladite séquence de messages enregistrés. Dans une telle implémentation, le procédé d'accès comprend, une étape de modification d'au moins l'un des messages de ladite séquence de message enregistrée au moyen desdites informations protocolaires.

Pour cela, le terminal modifie, créé ou supprime, des valeurs de champs d'entêtes de certains messages http initialement échangés entre le serveur d'origine et le serveur cache en vue du rejeu, entre le serveur cache et le terminal, de la séquence de messages enregistrée par le serveur cache.

De telles modifications des messages peuvent être effectuées par le terminal soit avant le rejeu de la séquence de messages soit au fil de l'eau pendant le rejeu des messages.

Dans une implémentation du procédé d'accès objet de l'invention, celui-ci comprend, une étape de réception d'informations protocolaires supplémentaires.

Ainsi, de telles informations protocolaires supplémentaires sont propres au terminal.

Dans une implémentation du procédé d'accès objet de l'invention, le procédé comprend une étape de vérification de l'authenticité dudit paramètre de délégation. La vérification de l'authenticité du paramètre de délégation comprend :
- l'émission d'une demande d'informations relatives audit serveur cache à destination d'un résolveur d'identifiants de nommage ,
- la réception d'un message comprenant une clé cryptographique associée au serveur d'origine associé audit contenu et le paramètre de délégation,
- la vérification du paramètre de délégation transmis par le serveur cache au moyen de la clé cryptographique et du paramètre de délégation transmis par le résolveur d'identifiant de nommage.

Afin de s'assurer de l'authenticité du paramètre de délégation transmis par le serveur cache, le terminal interroge un résolveur d'identifiants de nommage qui est considéré comme un équipement fiable. Le terminal vérifie alors l'authenticité de ce paramètre de délégation préalablement à toute demande d'accès à un contenu afin de s'assurer de la fiabilité du serveur cache vis-à-vis de la livraison du contenu en question.

L'invention concerne également un serveur cache auxquelles peut accéder au moins un terminal, ledit serveur hébergeant des données étant autorisé à livrer au moins un contenu à destination du terminal, le serveur cache comprenant des moyens pour :
au cours d'une première phase:
   - enregistrer d'une séquence de messages échangés entre le serveur cache et un serveur d'origine hébergeant le contenu au cours d'une session de communication établie avec le serveur d'origine associé audit contenu et au cours de laquelle ledit contenu est livré au serveur cache,
au cours d'une deuxième phase:
   - recevoir une demande d'accès audit contenu émise par le terminal,
   - en réponse à ladite demande d'accès audit contenu, rejouer, avec ledit terminal, de la séquence de messages enregistrée, résultant en la livraison dudit contenu.

L'invention concerne encore un terminal requérant l'accès à un contenu, et comprenant des moyens pour :
- émettre une demande d'accès audit contenu à destination d'un serveur cache au niveau duquel ledit contenu est mémorisé,
- rejouer, avec ledit serveur cache, d'une séquence de messages échangés entre le serveur cache et un serveur dit d'origine associé audit contenu au cours d'une session de communication établie entre le serveur cache et le serveur d'origine au cours de laquelle ledit contenu est délivré auprès du serveur cache, ladite séquence de messages ayant été enregistrée par ledit serveur cache, résultant en la livraison dudit contenu auprès du terminal.

L'invention concerne enfin des produits programme d'ordinateur comprenant des instructions de code de programme pour la mise en œuvre des procédés tels que décrits précédemment, lorsqu'ils sont exécutés par un processeur.

L'invention vise également un support d'enregistrement lisible par un ordinateur sur lequel sont enregistrés des programmes d'ordinateur comprenant des instructions de code de programme pour l'exécution des étapes des procédés selon l'invention tels que décrits ci-dessus.

Un tel support d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que les programmes d'ordinateur qu'il contient sont exécutables à distance. Les programmes selon l'invention peuvent être en particulier téléchargés sur un réseau par exemple le réseau Internet.

Alternativement, le support d'enregistrement peut être un circuit intégré dans lequel les programmes sont incorporés, le circuit étant adapté pour exécuter ou pour être utilisé dans l'exécution des procédés objets de l'invention précités.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****fig. 1****]** : cette figure représente un système dans lequel les procédés objets de l'invention sont mis en œuvre,
**[****fig. 2****]** : cette figure représente un diagramme d'échanges entre différents équipements de communication impliqués dans l'implémentation des procédés de livraison d'au moins un contenu et de demande d'accès à au moins un contenu,
**[****fig. 3****]** : cette figure représente un terminal 10 selon un mode de réalisation de l'invention. Un tel terminal 10 est apte à mettre en œuvre les différents modes de réalisation du procédé de demande de résolution d'un identifiant de nommage,
**[****fig. 4****]** : cette figure représente un serveur cache apte à mettre en œuvre les différents modes de réalisation du procédé de résolution d'identifiants de nommage.

### Description détaillée de modes de réalisation de l'invention

Le principe général de l'invention repose sur la délégation de la livraison de contenus habituellement effectuée par des serveurs d'origines hébergeant des contenus à livrer, appelés serveurs d'origine des contenus dans la suite du document, à des serveurs cache, tels que des serveurs web, gérés par exemple par un fournisseur de service internet. De tels serveurs cache mettent en œuvre une fonction de « cache intermédiaire » et sont appelés dans la suite du document serveurs cache.

Ainsi, un serveur cache stocke dans au moins une de ses mémoires cache des contenus transmis par les serveurs d'origine desdits contenus sous une forme primitive correspondant aux flux de paquets échangés lors du téléchargement de ces contenus à partir des serveurs d'origine desdits contenus. Puis le serveur cache transmet ce contenu à un client embarqué dans un terminal sans se reconnecter au serveur d'origine du contenu identifié dans une requête demandant la fourniture du contenu.

Pour cela, le serveur cache communique au client embarqué dans un terminal des données protocolaires échangées avec le serveur d'origine du contenu requis.

Le serveur cache transmet au client embarqué dans le terminal la forme primitive du flux de paquets échangés avec le serveur d'origine du contenu requis.

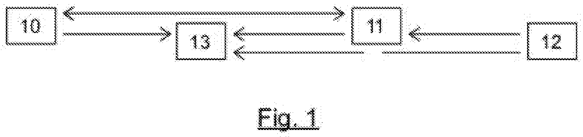

La **[****Fig. 1****]** représente un système dans lequel les procédés objets de l'invention sont mis en œuvre.

Le système comprend au moins un terminal 10 requérant un accès à au moins un contenu, tel qu'une page web ou un contenu multimédia, un serveur cache 13 dont l'identifiant de nommage est par exemple *journal.fr,* au moins un résolveur d'identifiants de nommage 11, au moins un serveur d'origine 12 dont l'identifiant de nommage est par exemple journal.fr, hébergeant au moins un contenu à livrer, par exemple une page web référencée *journal.fr*/*news*/*week19* et stockant des données relatives au contenu requis par le terminal 10 tel que des données relatives à la page web *journal.fr*/*news*/*week19* ou des données relatives à un contenu téléchargeable, etc.

Le terminal 10 peut échanger des messages avec le serveur cache 13 et avec le résolveur d'identifiants de nommage 11. Un terminal 10 est un équipement pouvant émettre des requêtes pour obtenir un contenu tel qu'un ordinateur personnel, une passerelle domestique, un décodeur de télévision numérique, un smartphone, un capteur, etc.

Le résolveur d'identifiants de nommage 11 reçoit des messages en provenance du serveur d'origine 12 du contenu et échange des messages avec le serveur cache 13.

Ces divers échanges de messages entre ces différents équipements ainsi que leurs contenus sont expliqués plus en détail dans la suite de ce document.

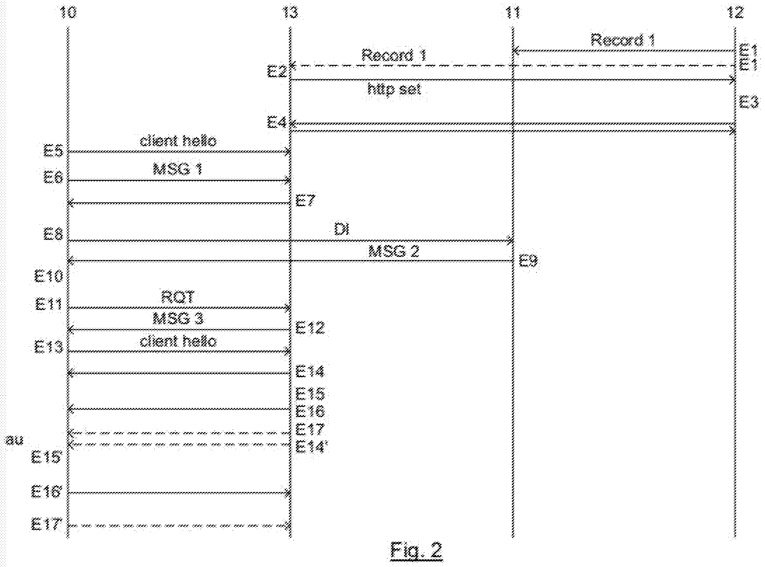

La **[****Fig. 2****]** représente un diagramme d'échanges entre différents équipements de communication impliqués dans l'implémentation des procédés de livraison d'au moins un contenu et de demande d'accès à au moins un contenu.

Dans une étape E1, le serveur d'origine 12 du contenu *journal.fr*/*news*/*week19* transmet à un résolveur d'identifiant de nommage 11 un message Record 1 tel que, par exemple, un message de type DNS record ESNI comprenant une clé cryptographique associée au serveur d'origine 12 et un paramètre de délégation associé au serveur cache 13 pour le contenu référencé journal.fr/news/week19 à destination du résolveur d'identifiant de nommage 11. Un exemple d'un tel message Record 1 est donné ci-dessous :

```
    ESNI record journal.fr {
         SNI encryption key: C5E74D
         Trusted_entities : {
              journal.fr: 9B5D248 #
         }
```

Le serveur d'origine 12 peut transmettre au résolveur d'identifiant de nommage 11, dans une implémentation particulière des procédés objets de l'invention, un seul message Record commun à un ensemble de contenus qu'il héberge et qui sont situés sur des branches d'une même URL (*Uniform Resource Locator*). Ce message Record commun à plusieurs contenus comprend une clé cryptographique associée au serveur d'origine 12 et un paramètre de délégation associé au serveur cache 13 communs à l'ensemble de ces contenus.

Par exemple l'identifiant de nommage journal1.fr/news est commun aux deux contenus respectivement référencés *journal1.fr*/*news*/*week19* et *journal1.fr*/*news*/*week20.*

Un exemple d'un tel message Record commun est donné ci-dessous :

```
    ESNI record journal1.fr {
         SNI encryption key: A94C7B
         Trusted_entities : {
              journal.fr: D3BA27E
         }
```

Dans cette implémentation, le terminal 10 détermine la validité de la clé pour chaque branche de l'arbre de nommage de l'URL demandé en commençant par l'URL du contenu demandé *journal1.fr*/*news*/*week19,* puis *journal1.fr*/*news* et enfin *journal1.fr.* La délégation est valide lorsque la clé est valide pour au moins l'une des branches: Ainsi le nombre de clés est réduit et une même clé peut être attribuée à des groupes de contenus complexes comme un site web ou un contenu multimédia structuré.

Le résolveur d'identifiant de nommage 11 stocke ces identifiants associés aux contenus dans une table de correspondance.

Dans les présents procédés de livraison d'au moins un contenu et de demande d'accès à au moins un contenu, le serveur d'origine 12 chiffre, au moyen de paramètres cryptographiques dérivés, entre autres, à partir de la clé privée associée à la clé publique, chaque identifiant d'un contenu à livrer associé à un serveur cache 13 auquel il donne une autorisation, ou délégation, d'exécution d'une fonction de livraison du contenu.

Dans le premier exemple décrit, la clé publique du serveur d'origine 12 est C5E74D. Le serveur d'origine 12 calcule ensuite une empreinte numérique de l'identifiant du contenu dont la livraison est déléguée au serveur cache 13. Cette empreinte numérique est signée par la clé cryptographique associée au serveur d'origine (12). Une telle empreinte numérique est par exemple un hash de la clé publique associé au serveur cache 13,d'un identifiant du serveur cache *journal.fr,* et de l'identifiant du contenu. Le serveur d'origine 12 détermine ainsi un paramètre de délégation du serveur cache 13 pour le contenu journal.fr : 9B5D248 #. Le paramètre de délégation du serveur cache 13 est par exemple transmis dans le champ « *Trusted-entities* » et la clé publique du serveur d'origine 12 est transmise dans le champ « *SNI encryption* » key du message Record 1 lorsque celui-ci est un message de type DNS record ESNI.

Dans un mode de réalisation particulier des procédés livraison d'au moins un contenu et de demande d'accès à au moins un contenu, les différents messages Record sont émis par le serveur d'origine 12 directement à destination du serveur cache 13.

Dans une étape E2, le serveur cache 13 établit une session de communication avec le serveur d'origine 12 associé audit contenu au cours de laquelle le contenu est délivré au serveur cache 13.

L'émission par le serveur cache 13 d'un message de type http *get* déclenche la procédure de livraison du contenu.

Contrairement aux techniques de "caching" connues dans lesquelles le contenu en lui-même est stocké dans au moins une mémoire cache d'un serveur cache 13, les procédés objet de la présente invention repose sur le stockage dans au moins une mémoire cache du serveur cache 13 de l'ensemble des messages échangés entre le serveur d'origine 12 et le serveur cache 13 conduisant à la livraison du contenu au serveur cache 13.

Au cours d'une étape E3, le serveur d'origine 12 génère des informations protocolaires telles que des informations de signalisation, comme des entêtes http, cookies, contrôle d'accès, etc., et/ou des informations de contrôle destinées à être utilisées lors de la livraison du contenu au terminal 10,

Les informations protocolaires générées sont par exemple une la liste de champs d'entête qu'il est possible d'adapter. Une telle liste est par exemple la suivante :

```
    [
     { "op": "replace", "path": "user-agent", "value": "w" },
   { "op": "add", "path": "any", "value": "any"}, // le cache peut ajouter les champs qu'il veut
    ]
```

Les informations protocolaires générées peuvent comprendre des instructions permettant de changer le protocole ou la version de protocole utilisé lors téléchargement du contenu entre le serveur d'origine 12 et le serveur cache 13 afin de s'adapter au protocole utilisé par au terminal 10.

Enfin, Les informations protocolaires générées peuvent également comprendre des instructions permettant de changer l'espacement temporel entre les messages pour réduire le débit, et indiquer ces changements dans des messages de contrôle.

Les informations protocolaires ainsi générées par le serveur d'origine 12 sont ensuite certifiées par le serveur d'origine 12 au moyen des paramètres cryptographiques dérivés, entre autres, à partir de la clé privée associée à la clé publique du serveur d'origine 12. Ainsi, l'intégrité des informations protocolaires ainsi générées est garantie.

Dans une étape E4, le serveur cache 13 stocke, dans au moins l'une de ses mémoires cache, l'ensemble des messages échangés, ou joués, avec le serveur d'origine 12 associé audit contenu qui suivent l'émission du message http *get* dans un fichier de type HARS (*http archive secure)* par exemple. Le format HARS permet de stocker des messages sous une forme dite « opaque », c'est-à-dire inchangée, ou sous forme interprétable, ou sous forme mixte afin de garder les messages de données sous forme chiffrée tout en laissant toute ou partie des informations de signalisation lisible.

L'ensemble des messages enregistrés par le serveur cache 13 comprend les messages comprenant les informations protocolaires générées et certifiées par le serveur d'origine 12 ainsi que l'ensemble des messages classiquement échangés entre le serveur d'origine 12 et un serveur cache 13 lors du téléchargement d'un contenu. Les messages classiquement échangés entre le serveur d'origine 12 et un serveur cache 13 lors du téléchargement d'un contenu constituent la forme primitive correspondant aux flux de paquets échangés lors du téléchargement de ces contenus.

Un exemple des messages échangés entre le serveur d'origine 12 et le serveur cache 13 est représenté ci-dessous :

```
    HTTP2_SESSION_INITIALIZED
    --> protocol = "h2"
    --> source_dependency = 206050 (SOCKET)
    HTTP2_SESSION_SEND_SETTINGS
    --> settings = ["[id:1 (SETTINGS_HEADER_TABLE_SIZE) value:65536]"
    HTTP2_SESSION_UPDATE_RECV_WINDOW
    --> delta = 15663105
    --> window_size = 15728640
    HTTP2_SESSION_SEND_WINDOW_UPDATE
    --> delta = 15663105
    --> stream_id = 0
    HTTP2_SESSION_SEND_HEADERS
    --> exclusive = true
    --> fin = true
    --> has_priority = true
    --> :method: POST
        :authority: www.youtube.com
        :scheme: https
        :path: /api/stats/qoe?event=streamingstats&fmt=243&afmt=251
       content-length: 0
       pragma: no-cache
       cache-control: no-cache
        sec-fetch-mode: no-cors
       origin: https://www.youtube.com
       user-agent: Mozilla/5.0 (Windows NT 10.0; Win64; x64)
       dnt: 1
       content-type: text/plain;charset=UTF-8
       accept: */*
       x-client-data: CJa2yQEIpLbJAQjBtskBCKmdygEI4qjKAQjt
        sec-fetch-site: same-origin
    
```

A l'issue de cet enregistrement, les messages comprenant les informations protocolaires générées et certifiées par le serveur d'origine 12 ainsi l'ensemble des messages classiquement échangés entre le serveur d'origine 12 et un serveur cache 13 lors du téléchargement d'un contenu sont stockés dans le serveur cache 13. Ces messages sont mémorisés dans un fichier HARS lui-même stocké dans le serveur cache 13.

Le format d'enregistrement HARS permet de stocker dans un fichier, ou une archive, les différents messages transportant les informations protocolaires générées par le serveur d'origine 12 et les différents messages de données échangés, ou joués, lors du téléchargement du contenu entre le serveur d'origine 12 et le serveur cache 13. De tels messages sont par exemple conformes aux protocoles HTTP2 ou QUIC.

Dans une étape E5, le terminal 10 établit une session de communication avec le serveur cache 13, pour cela, il émet par exemple un message de demande d'établissement de la session de communication de type https *ClientHello* à destination du serveur cache 13. Ce message est émis en utilisant le protocole TLS, DTLS ou QUIC, dans ce dernier cas, le message est alors un message de type CHO.

Dans une étape E6, le terminal 10 émet ensuite un message MSG1 de type http *connect resource,* dans lequel le paramètre *resource* comprend une URL ou un identifiant de nommage du contenu demandé, soit par exemple *journal.fr.*

En réponse à ce message MSG1, le serveur cache 13 transmet, dans une étape E7, des informations relatives au contenu *journal.fr* dont il dispose tel que le paramètre de délégation associé au serveur cache 13 pour le contenu *journal.fr* ou encore la clé publique associée au serveur d'origine 12 et éventuellement un paramètre convenu du message *ClientHello* chiffré avec la clé privée associée à la clé publique transmises. Ainsi, pour le contenu *journal.fr,* le serveur cache 13 transmet le paramètre de délégation 9B5D248 #. De telles informations relatives au contenu *journal.fr* sont par exemple transmises dans un message *ServerHello.*

Dans le cas où le paramètre *resource* est vide, en réponse à ce message MSG1, le serveur cache 13 transmet, dans l'étape E7, des informations relatives aux contenus dont il dispose ainsi qu'une liste comprenant les différents paramètres de délégation associés au serveur cache 13 et correspondant aux différents contenus que le serveur cache 13 est autorisé à livrer. Ainsi, par exemple le serveur cache 13 transmet les paramètres de délégation pour les contenus *journal.fr et journal1.fr* décrit ci-dessus.

Les étapes E8 à E10 décrites ci-après constituent une phase de vérification de l'authenticité des paramètres de délégation transmis par le serveur cache 13.

Ainsi, dans une étape E8, le terminal 10 émet une demande d'informations DI relatives au serveur cache 13 à destination du résolveur d'identifiants de nommage 11. Une telle demande d'information comprend au moins un identifiant du contenu *journal.fr,* par exemple, pour lequel le terminal 10 souhaite vérifier le paramètre de délégation associé au serveur cache 13. La demande d'information DI est par exemple un message du type DNS *query ESNI.*

Dans une étape E9, le résolveur d'identifiants de nommage 11 transmet un message MSG2, tel que par exemple un message de type DNS *record ESNI,* comprenant la clé publique C5E74D associée au serveur d'origine 12 et le paramètre de délégation 9B5D248 # associé au serveur cache 13 pour le contenu *journal.fr.*

Dans cet exemple d'implémentation, le terminal 10 dispose d'une première version V1 du paramètre de délégation associé au serveur cache 13 pour le contenu *journal.fr* qu'il a reçu du serveur cache 13 au cours de l'étape E7, et d'une deuxième version V2 du paramètre de délégation associé au serveur cache 13 pour le contenu *journal.fr* qu'il a reçu du résolveur d'identifiants de nommage 11 au cours de l'étape E9. Cette deuxième version V2 du paramètre de délégation associé au serveur cache 13 pour le contenu *journal.fr* est considérée comme fiable car émise par un équipement fiable, à savoir le résolveur d'identifiants de nommage 11.

Au cours d'une étape E10, le terminal 10 vérifie l'authenticité de la première version V1 du paramètre de délégation. Pour cela, le terminal 10 utilise les paramètres de chiffrement ESNI, tels que par exemple la clé publique C5E74D, associés au serveur d'origine 12 afin de vérifier l'authenticité de l'empreinte numérique de la première version V1 du paramètre de délégation, il obtient ainsi une première version décryptée DcV1 de l'identifiant de nommage du serveur cache 13. La première version décryptée DcV1 de l'identifiant de nommage donne « *journal.fr* ».

Toujours au cours de l'étape E10, le terminal 10 déchiffre également la deuxième version V2 du paramètre de délégation associé au serveur cache 13 au moyen de la clé publique, il obtient ainsi une deuxième version décryptée DcV2 de l'identifiant de nommage du serveur cache 13. Ici, la deuxième version décryptée DcV2 de l'identifiant de nommage ainsi déchiffrée donne « *journal.fr* ». Le terminal 10 compare ensuite la première version décryptée DcV1 de l'identifiant de nommage du serveur cache 13 avec la deuxième version décryptée DcV2 de l'identifiant de nommage du serveur cache 13. Lorsque les deux versions décryptée DcV1 et décryptée DcV2 de l'identifiant de nommage associé au serveur cache 13 correspondent, l'authenticité du paramètre de délégation associé au serveur cache 13 pour un contenu donné est vérifiée.

Lorsque l'authenticité du paramètre de délégation associé au serveur cache 13 pour un contenu donné est vérifiée, le terminal 10 émet alors à destination du serveur cache 13, dans une étape E11, une requête RQT de rejeu du fichier HARS stocké dans le serveur cache 13 et associé au contenu requis. Une telle requête est par exemple un message du type http2 *create replay stream* comprenant au moins un identifiant du serveur d'origine 12 et un identifiant du contenu requis.

En effet, comme indiqué précédemment, contrairement aux techniques de "caching" connues dans lesquelles le contenu en lui-même est stocké dans au moins une mémoire cache d'un serveur cache 13, les procédés objet de la présente invention reposent sur le stockage dans au moins une mémoire cache du serveur cache 13 de l'ensemble des messages joués entre le serveur d'origine 12 et le serveur cache 13 conduisant à la livraison du contenu au serveur cache 13 afin que ces messages puissent être rejoués entre le serveur cache 13 et le terminal 10 dans le but de délivrer le contenu requis au terminal 10.

Le terme rejeu consiste en la répétition, par le serveur cache 13 et avec le terminal 10 ou par le terminal 10 et avec le serveur cache 13, de la séquence de messages échangés entre le serveur d'origine 12 et le serveur cache 13 lors du téléchargement du contenu requis et stockés dans un fichier HARS, les messages rejoués pouvant, en cas de besoin, être modifiés pour s'adapter au contexte dans lequel ils sont rejoués au moyen des informations protocolaires générées par le serveur d'origine 12 et également stockées dans le fichier HARS. Pour cela, des modifications peuvent être appliquées à certains messages compris dans le fichier HARS lors du rejeu de la séquence de messages.

Ainsi, dans une étape E12, le serveur cache 13 émet un message MSG3 à destination du terminal 10. Le message MSG3 comprend des paramètres utiles à l'établissement d'une session de communication entre le terminal 10 et le serveur cache 13 au cours de laquelle le contenu requis est destiné à être livré au terminal 10 ainsi que des clés cryptographiques destinées à être utilisées afin de permettre la diffusion du contenu requis sur le terminal 10. Ces clés cryptographiques sont acquises par le serveur cache 13 lors des étapes E3 et E4.

Dans une étape E13, le terminal 10 émet alors un message TLS « *ClientHello* » à destination du serveur cache 13. Ce message TLS « *ClientHello* » est chiffré au moyen des clés cryptographiques reçues au cours de l'étape E12.

Le serveur cache 13 déchiffre le message « *TLS ClientHello* » au moyen des clés cryptographiques et transmet, dans une étape E14 un message « *ServerHello TLS* » à destination du terminal 10 afin d'établir une connexion HTTPS entre le serveur cache 13 et le terminal 10.

Dans une première implémentation des procédés objet de l'invention, les modifications à appliquer à certains messages du fichier HARS sont effectuées au niveau du serveur cache 13. Les modifications à appliquer à certains messages du fichier HARS consistent à modifier certains paramètres des messages stockés dans le fichier HARS en fonction des informations protocolaires générées par le serveur d'origine 12 et également stockées dans le fichier HARS.

Dans une première variante de réalisation de cette première implémentation, au cours d'une étape E15, le serveur cache 13 prépare le rejeu du fichier HARS associé au contenu avec le terminal 10 en vue de livrer le contenu requis à ce dernier.

Pour cela, le serveur cache 13 modifie certains des messages stockés dans le fichier HARS associé au contenu requis afin de les adapter aux points d'émission/réception, c'est-à-dire le serveur cache 13 et le terminal 10, s'ils sont différents de ceux du jeu de messages initial, c'est-à-dire s'ils sont différents des messages échangés entre le serveur d'origine 12 et le serveur cache 13 lors du téléchargement du contenu requis. Pour cela, le serveur cache 13 procède à ces modifications sur la base des informations protocolaires générées par le serveur d'origine 12 lors de l'étape E3. Le terme modification des messages stockés dans le fichier HARS couvre l'ajout, la suppression de messages ou la modification de certains paramètres relatifs aux messages. Une telle liste de modifications de valeurs est par exemple :
user-agent: Mozilla/5.0
x-nginx-cache-version: 8.4.1

Une fois le fichier HARS associé au contenu prêt, le serveur cache 13 déclenche, dans une étape E16, le rejeu des messages stockés dans le fichier HARS et modifiés au cours de l'étape E15.

Dans une deuxième variante de réalisation de cette première implémentation, au cours d'une étape E17 qui suit l'étape E14, le serveur cache 13 modifie certains des messages stockés dans le fichier HARS associé au contenu requis afin de les adapter aux points d'émission/réception, lors du rejeu de ces messages. Ainsi, dans cette deuxième variante de réalisation de cette première implémentation, les messages devant être modifiés le sont au fil de l'eau.

Tout comme dans la première variante de réalisation, la modification des messages se fait sur la base des informations protocolaires générées par le serveur d'origine 12 lors de l'étape E3. Quelle que soit la variante de réalisation, les modifications apportées à certains messages du fichier HARS peuvent également permettre de changer le protocole utilisé lors téléchargement du contenu entre le serveur d'origine 12 et le serveur cache 13 afin de s'adapter au terminal 10. Ces changements sont alors indiqués dans les messages de contrôles insérés par le serveur cache 13. Ainsi, à titre d'exemple, les messages *http get* stockés dans le fichier HARS sont remplacés par des messages de type *push* http2, etc.

Les modifications apportées à certains messages du fichier HARS peuvent également changer l'espacement temporel entre les messages pour réduire le débit, et indiquer ces changements dans les messages de contrôle.

A l'issue du rejeu de l'ensemble des messages stockés dans le fichier HARS et modifiés au cours des étapes E15 ou E17, le contenu requis est livré au terminal 10 qui peut alors le diffuser.

A l'issue du rejeu de l'ensemble des messages stockés dans le fichier HARS, le terminal 10 dispose également des informations de protocolaires générées par le serveur d'origine 12 qui peuvent être utilisées afin de vérifier l'intégrité des données transmises par le serveur cache 13.

Dans une deuxième implémentation des procédés objet de l'invention, les modifications à appliquer à certains messages du fichier HARS sont effectuées au niveau du terminal 10. Le terminal 10 modifie certains paramètres des messages stockés dans le fichier HARS qui a été transmis au terminal 10 en fonction des informations de protocolaires générées par le serveur d'origine 12, et elles-mêmes comprises dans le fichier HARS transmis. Dans cette deuxième implémentation, le terminal 10 peut utiliser des informations protocolaires supplémentaires afin de modifier de certains messages compris dans le fichier HARS. De telles informations protocolaires supplémentaires ne sont pas comprises dans le fichiers HARS, elles sont transmises séparément au terminal 10 par le serveur cache 13 dans une étape E14'. Cela tient au fait que dans ce cas de figure, les informations protocolaires comprises dans le fichier HARS concernent l'identité des messages à modifier en vue du rejeu, et les informations protocolaires supplémentaires concernent les valeurs à appliquer aux messages identifiés dans les informations protocolaires lors de leur modifications. Les informations protocolaires supplémentaires sont générées par le serveur cache 13 en fonctions d'informations reçues en provenance du terminal 10 au cours des étapes E12 à E14. Ainsi, si les informations protocolaires peuvent être communes à plusieurs terminaux, les informations protocolaires supplémentaires sont propres au terminal 10.

Dans une première variante de réalisation de cette deuxième implémentation, au cours d'une étape E15', le terminal 10, modifie, créé ou supprime, des valeurs de champs d'entêtes de certains messages initialement échangés entre le serveur d'origine 12 et le serveur cache 13 en vue du rejeu, entre le serveur cache 13 et le terminal 10, de la séquence de messages enregistrée au cours de l'étape E4. La liste des valeurs de champs d'entêtes pouvant être modifiées est par exemple :

```
 [
 { "op": "replace", "path": "user-agent", "value": " Mozilla/5.0 (Linux; Android 7.0; SM-G892A
 Build/NRD90M; wv) AppleWebKit/537.36 (KHTML, like Gecko) Version/4.0 Chrome/60.0.3112.107
 Mobile Safari/537.36 " },
 {"op": "add", "path": "/x-nginx-cache-version", "value": "8.4.1"},
 ]
```

Une fois le fichier HARS associé au contenu prêt, le terminal 10 déclenche, dans une étape E16', le rejeu des messages stockés dans le fichier HARS et modifiés au cours de l'étape E15'.

Dans une deuxième variante de réalisation de cette deuxième implémentation, au cours d'une étape E17' qui suit l'étape E14, le terminal 10 modifie certains des messages stockés dans le fichier HARS associé au contenu requis afin de les adapter aux points d'émission/réception, lors du rejeu de ces messages. Ainsi, dans cette deuxième variante de réalisation de cette deuxième implémentation, les messages devant être modifiés le sont au fil de l'eau.

Tout comme dans la première variante de réalisation, la modification des messages se fait sur la base des informations protocolaires générées par le serveur d'origine 12 lors de l'étape E3.

Quelle que soit la variante de réalisation, les modifications à apporter à certains messages du fichier HARS peuvent également permettre de changer le protocole utilisé lors téléchargement du contenu entre le serveur d'origine 12 et le serveur cache 13 afin de s'adapter au terminal 10. Ces changements sont alors indiqués dans les messages de contrôles insérés par le terminal 10. Ainsi, à titre d'exemple, les messages *http get* stockés dans le fichier HARS sont remplacés par des messages de type *push* http2, etc.

Le terminal 10 peut également changer l'espacement temporel entre les messages pour réduire le débit, et indiquer ces changements dans les messages de contrôle.

Aussi bien dans la première implémentation que dans la deuxième implémentation, le terminal 10 dispose d'une version certifiée par le serveur d'origine 12 des informations protocolaires, le terminal 10 peut donc vérifier, au moyens des clés cryptographiques reçue, que les modifications effectuées par le serveur cache 13 ou le terminal 10 respectent les consignes du serveur d'origine 12.

A l'issue du rejeu des messages stockés dans le fichier HARS et modifiés au cours de l'étape E15' ou E17', le contenu requis est livré au terminal 10 qui peut alors le diffuser.

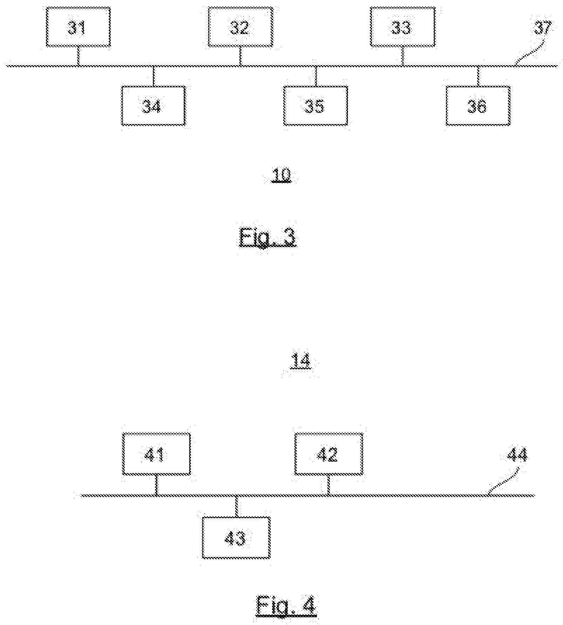

La **[****fig. 3****]** représente un terminal 10 selon un mode de réalisation de l'invention. Un tel terminal 10 est apte à mettre en œuvre les différents modes de réalisation du procédé de demande d'accès à au moins un contenu selon la figure 2.

Un terminal 10 peut comprendre au moins un processeur matériel 31, une unité de stockage 32, un dispositif de saisie 33, un dispositif d'affichage 34, une interface 35, et au moins une interface de réseau 36 qui sont connectés entre eux au travers d'un bus 47. Bien entendu, les éléments constitutifs du terminal 10 peuvent être connectés au moyen d'une connexion autre qu'un bus.

Le processeur 31 commande les opérations du terminal 10. L'unité de stockage 42 stocke au moins un programme pour la mise en œuvre du procédé selon un mode de réalisation de l'invention à exécuter par le processeur 31, et diverses données, telles que des paramètres utilisés pour des calculs effectués par le processeur 31, des données intermédiaires de calculs effectués par le processeur 31, etc. Le processeur 31 peut être formé par tout matériel ou logiciel connu et approprié, ou par une combinaison de matériel et de logiciel. Par exemple, le processeur 31 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 32 peut être formée par n'importe quel moyen approprié capable de stocker le programme ou les programmes et des données d'une manière lisible par un ordinateur. Des exemples d'unité de stockage 32 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Le dispositif de saisie 33 peut être formé par un clavier, un dispositif de pointage tel qu'une souris à utiliser par un utilisateur pour entrer des commandes. Le dispositif d'affichage 34 peut être également formé par un module d'affichage, tel que par exemple une interface graphique utilisateur ou GUI (pour *Graphical User Interface*)*.*

L'interface 35 fournit une interface entre le terminal 10 et un autre équipement.

Au moins une interface réseau 36 fournit une connexion entre le terminal 10 et le serveur cache 13, et le résolveur 11.

La **[****fig. 4****]** représente un serveur cache 13 apte à mettre en œuvre les différents modes de réalisation du procédé de livraison d'au moins un contenu selon la figure 2.

Un serveur cache 13 peut comprendre au moins un processeur matériel 41, une unité de stockage 42, et au moins une interface de réseau 43 qui sont connectés entre eux au travers d'un bus 44. Bien entendu, les éléments constitutifs du serveur cache 13 peuvent être connectés au moyen d'une connexion autre qu'un bus.

Le processeur 41 commande les opérations du serveur cache 13. L'unité de stockage 52 stocke au moins un programme pour la mise en œuvre de la méthode selon un mode de réalisation à exécuter par le processeur 41, et diverses données, telles que des paramètres utilisés pour des calculs effectués par le processeur 41, des données intermédiaires de calculs effectués par le processeur 41, etc. Le processeur 41 peut être formé par tout matériel ou logiciel connu et approprié, ou par une combinaison de matériel et de logiciel. Par exemple, le processeur 41 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 42 peut être formée par n'importe quel moyen approprié capable de stocker le programme ou les programmes et des données d'une manière lisible par un ordinateur. Des exemples d'unité de stockage 42 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Au moins une interface réseau 43 fournit une connexion entre le serveur cache 13, le résolveur 11, le terminal 10 et le serveur d'origine 12.

## Revendications

1. Procédé de livraison d'au moins un contenu à destination d'au moins un terminal (10), ledit procédé étant mis en œuvre par un serveur dit *cache* (13) auxquelles peut accéder ledit au moins un terminal (10), et comprenant :
une première phase au cours de laquelle les étapes suivantes sont mises en œuvre :
- enregistrement (E4) d'une séquence de messages échangés entre le serveur *cache* (13) et un serveur dit d'origine (12) hébergeant le contenu au cours d'une session de communication établie avec le serveur d'origine (12) associé audit contenu et au cours de laquelle ledit contenu est livré au serveur *cache,*
une deuxième phase au cours de laquelle les étapes suivantes sont mises en œuvre:
- réception (E6) d'une demande d'accès audit contenu émise par le terminal (10),
- en réponse à ladite demande d'accès audit contenu, rejeu (E16, E16', E17, E17'), avec ledit au moins un terminal (10), de la séquence de messages enregistrée, résultant en la livraison dudit contenu.

2. Procédé de livraison d'au moins un contenu à destination d'au moins un terminal (10) selon la revendication 1, comprenant suite à la réception (E6) d'une demande d'accès audit contenu, la transmission (E7) à destination du terminal (10) d'un message comprenant au moins un paramètre, dit paramètre de délégation, relatif à une autorisation de livraison dudit contenu par ledit serveur *cache (13).*

3. Procédé de livraison d'au moins un contenu à destination d'au moins un terminal (10) selon la revendication 1, dans lequel une partie des messages échangés entre le serveur *cache* (13) et le serveur d'origine (12) comprennent des informations relatives à la signalisation et/ou au contrôle de ladite séquence de messages enregistrés.

4. Procédé de livraison d'au moins un contenu à destination d'au moins un terminal (10) selon la revendication 3, comprenant, une étape de modification (E15, E17) d'au moins l'un des messages de ladite séquence de message enregistrée au moyen desdites informations relatives à la signalisation et/ou au contrôle de ladite séquence de messages enregistrés.

5. Procédé de livraison d'au moins un contenu à destination d'au moins un terminal selon la revendication 3, comprenant une étape d'émission (E14') d'informations supplémentaires relatives à la signalisation et/ou au contrôle de ladite séquence de messages enregistrés vers le terminal.

6. Procédé de livraison d'au moins un contenu à destination d'au moins un terminal (10) selon la revendication 4, dans lequel l'étape de modification (E15, E17) d'au moins un des messages de la séquence enregistrée est déclenchée par la réception d'une requête de rejeu (E11) émise par le terminal (10).

7. Procédé de livraison d'au moins un contenu à destination d'au moins un terminal (10) selon la revendication 2 comprenant préalablement à l'étape de transmission (E7) du paramètre de délégation, une étape de réception (E1) d'un message comprenant le paramètre de délégation.

8. Procédé d'accès à un contenu, ledit procédé étant mis en œuvre par un terminal (10) et comprenant les étapes suivantes :
- émission (E6) d'une demande d'accès audit contenu à destination d'un serveur cache (13),
- rejeu (E16, E16', E17, E17'), avec ledit serveur cache (13), d'une séquence de messages échangés entre le serveur cache (13) et un serveur dit d'origine (12) associé audit contenu au cours d'une session de communication établie entre le serveur cache (13) et le serveur d'origine (12) au cours de laquelle ledit contenu est délivré auprès du serveur cache (13), ladite séquence de messages ayant été enregistrée par ledit serveur cache (13), résultant en la livraison dudit contenu auprès du terminal (10).

9. Procédé d'accès à un contenu selon la revendication 8, comprenant préalablement à l'étape de rejeu, une étape de réception (E7) d'un message, émis par un serveur dit cache (13), comprenant au moins un paramètre, dit paramètre de délégation, relatif à une autorisation d'exécution par ledit serveur cache (13) d'une fonction de livraison dudit contenu.

10. Procédé d'accès à un contenu selon la revendication 8, dans lequel une partie des messages échangés entre le serveur *cache* (13) et le serveur d'origine (12) comprennent des informations relatives à la signalisation et/ou au contrôle de ladite séquence de messages enregistrés.

11. Procédé d'accès à un contenu selon la revendication 10, comprenant, une étape de réception d'informations supplémentaires relatives à la signalisation et/ou au contrôle de ladite séquence de messages enregistrés (E14').

12. Procédé d'accès à un contenu selon la revendication 10, comprenant, une étape de modification (E15', E17') d'au moins l'un des messages de ladite séquence de message enregistrée au moyen desdites informations relatives à la signalisation et/ou au contrôle de ladite séquence de messages enregistrés.

13. Procédé d'accès à un contenu selon la revendication 9, comprenant une phase de vérification de l'authenticité dudit paramètre de délégation comprenant :
- l'émission (E8) d'une demande d'informations relatives audit serveur cache (13) à destination d'un résolveur d'identifiants de nommage (11),
- la réception (E9) d'un message comprenant une clé cryptographique associée au serveur d'origine (12) associé audit contenu et le paramètre de délégation,
- la vérification (E10) du paramètre de délégation transmis par le serveur cache (13) au moyen de la clé cryptographique et du paramètre de délégation transmis par le résolveur d'identifiant de nommage (11).

14. Serveur cache (13) auxquelles peut accéder au moins un terminal (10), ledit serveur hébergeant des données (10) étant autorisé à livrer au moins un contenu à destination du terminal (10), le serveur cache (13) comprenant des moyens pour :
au cours d'une première phase:
- enregistrer une séquence de messages échangés entre le serveur cache (13) et un serveur d'origine (12) hébergeant le contenu au cours d'une session de communication établie avec le serveur d'origine (12) associé audit contenu et au cours de laquelle ledit contenu est livré au serveur cache,
au cours d'une deuxième phase:
- recevoir (E7) une demande d'accès audit contenu émise par le terminal (10),
- en réponse à ladite demande d'accès audit contenu, rejouer, avec ledit terminal (10), de la séquence de messages enregistrée, résultant en la livraison dudit contenu.

15. Terminal (10) requérant l'accès à un contenu, et comprenant des moyens pour :
- émettre une demande d'accès audit contenu à destination d'un serveur cache (13) au niveau duquel ledit contenu est mémorisé,
- rejouer , avec ledit serveur cache (13), d'une séquence de messages échangés entre le serveur cache (13) et un serveur dit d'origine (12) associé audit contenu au cours d'une session de communication établie entre le serveur cache (13) et le serveur d'origine (12) au cours de laquelle ledit contenu est délivré auprès du serveur cache (13), ladite séquence de messages ayant été enregistrée par ledit serveur cache (13), résultant en la livraison dudit contenu auprès du terminal (10).

## Patentansprüche

1. Verfahren zur Lieferung mindestens eines Inhalts an mindestens ein Endgerät (10), wobei das Verfahren durch einen sogenannten Cache-Server (13) umgesetzt wird, auf den durch das mindestens eine Endgerät (10) zugegriffen werden kann, und Folgendes aufweist:
eine erste Phase, in der die folgenden Schritte umgesetzt werden:
- Speichern (E4) einer Sequenz von Nachrichten, die zwischen dem Cache-Server (13) und einem sogenannten Ursprungsserver (12), auf dem der Inhalt gehostet wird, während einer Kommunikationssitzung ausgetauscht werden, die mit dem Ursprungsserver (12) aufgebaut wurde, der dem Inhalt zugeordnet ist, und während der der Inhalt an den Cache-Server geliefert wird,
eine zweite Phase, in der die folgenden Schritte umgesetzt werden:
- Empfangen (E6) einer vom Endgerät (10) gesendeten Anfrage zum Zugriff auf den Inhalt,
- als Antwort auf die Anfrage zum Zugriff auf den Inhalt, erneutes Wiedergeben (E16, E16', E17, E17'), mit dem mindestens einen Endgerät (10), der gespeicherten Sequenz von Nachrichten, was zur Lieferung des Inhalts führt.

2. Verfahren zur Lieferung mindestens eines Inhalts an mindestens ein Endgerät (10) nach Anspruch 1, das nach dem Empfangen (E6) einer Anfrage zum Zugriff auf den Inhalt, das Übertragen (E7) einer Nachricht an das Endgerät (10) aufweist, die mindestens einen Parameter, einen sogenannten Delegationsparameter, enthält, der sich auf eine Berechtigung zur Lieferung des Inhalts durch den Cache-Server (13) bezieht.

3. Verfahren zur Lieferung mindestens eines Inhalts an mindestens ein Endgerät (10) nach Anspruch 1, wobei ein Teil der zwischen dem Cache-Server (13) und dem Ursprungsserver (12) ausgetauschten Nachrichten Informationen bezüglich der Signalisierung und/oder Steuerung der Sequenz gespeicherter Nachrichten aufweist.

4. Verfahren zur Lieferung mindestens eines Inhalts an mindestens ein Endgerät (10) nach Anspruch 3, das einen Schritt des Änderns (E15, E17) mindestens einer der Nachrichten der gespeicherten Nachrichtensequenz unter Verwendung der Informationen bezüglich der Signalisierung und/oder Steuerung der Sequenz gespeicherter Nachrichten aufweist.

5. Verfahren zur Lieferung mindestens eines Inhalts an mindestens ein Endgerät nach Anspruch 3, das einen Schritt des Sendens (E14') von zusätzlichen Informationen bezüglich der Signalisierung und/oder Steuerung der Sequenz gespeicherter Nachrichten an das Endgerät aufweist.

6. Verfahren zur Lieferung mindestens eines Inhalts an mindestens ein Endgerät (10) nach Anspruch 4, wobei der Schritt des Änderns (E15, E17) mindestens einer der Nachrichten der gespeicherten Sequenz durch den Empfang einer vom Endgerät (10) gesendeten Aufforderung zum erneuten Wiedergeben (E11) ausgelöst wird.

7. Verfahren zur Lieferung mindestens eines Inhalts an mindestens ein Endgerät (10) nach Anspruch 2, das vor dem Schritt des Übertragens (E7) des Delegationsparameters einen Schritt des Empfangens (E1) einer Nachricht aufweist, die den Delegationsparameter enthält.

8. Verfahren zum Zugriff auf einen Inhalt, wobei das Verfahren durch ein Endgerät (10) umgesetzt wird und die folgenden Schritte aufweist:
- Senden (E6) einer Anfrage zum Zugriff auf den Inhalt an einen Cache-Server (13),
- erneutes Wiedergeben (E16, E16', E17, E17'), mit dem Cache-Server (13), einer Sequenz von Nachrichten, die zwischen dem Cache-Server (13) und einem sogenannten Ursprungsserver (12) ausgetauscht werden, der dem Inhalt während einer Kommunikationssitzung zugeordnet wird, die zwischen dem Cache-Server (13) und dem Ursprungsserver (12) aufgebaut wurde und während der der Inhalt an den Cache-Server (13) geliefert wird, wobei die Sequenz von Nachrichten vom Cache-Server (13) gespeichert wurde, was zur Lieferung des Inhalts an das Endgerät (10) führt.

9. Verfahren zum Zugriff auf einen Inhalt nach Anspruch 8, das vor dem Schritt des erneuten Wiedergebens einen Schritt des Empfangens (E7) einer Nachricht aufweist, die von einem sogenannten Cache-Server (13) gesendet wird und mindestens einen Parameter, den sogenannten Delegationsparameter, enthält, der sich auf eine Berechtigung zur Ausführung einer Funktion zur Lieferung des Inhalts durch den Cache-Server (13) bezieht.

10. Verfahren zum Zugriff auf einen Inhalt nach Anspruch 8, wobei ein Teil der zwischen dem Cache-Server (13) und dem Ursprungsserver (12) ausgetauschten Nachrichten Informationen bezüglich der Signalisierung und/oder Steuerung der Sequenz gespeicherter Nachrichten aufweist.

11. Verfahren zum Zugriff auf einen Inhalt nach Anspruch 10, das einen Schritt des Empfangens von zusätzlichen Informationen bezüglich der Signalisierung und/oder Steuerung der Sequenz gespeicherter Nachrichten (E14') aufweist.

12. Verfahren zum Zugriff auf einen Inhalt nach Anspruch 10, das einen Schritt des Änderns (E15', E17') mindestens einer der Nachrichten der gespeicherten Nachrichtensequenz unter Verwendung der Informationen bezüglich der Signalisierung und/oder Steuerung der Sequenz gespeicherter Nachrichten aufweist.

13. Verfahren zum Zugriff auf einen Inhalt nach Anspruch 9, das eine Phase des Verifizierens der Authentizität des Delegationsparameters aufweist, die Folgendes aufweist:
- Senden (E8) einer Info-Anfrage bezüglich des genannten Cache-Servers (13) an einen Namensauflöser (11),
- Empfangen (E9) einer Nachricht, die einen kryptografischen Schlüssel enthält, der dem Ursprungsserver (12) zugeordnet ist, der dem Inhalt zugeordnet ist, sowie den Delegationsparameter,
- Überprüfen (E10) des vom Cache-Server (13) übertragenen Delegationsparameters anhand des kryptografischen Schlüssels und des vom Namensauflöser (11) übermittelten Delegationsparameters.

14. Cache-Server (13), auf den mindestens ein Endgerät (10) zugreifen kann, wobei der Server, der Daten (10) hostet, berechtigt ist, mindestens einen Inhalt an das Endgerät (10) zu liefern, und wobei der Cache-Server (13) Mittel aufweist, um:
in einer ersten Phase:
- eine Sequenz von Nachrichten zu speichern, die zwischen dem Cache-Server (13) und einem Ursprungsserver (12), auf dem der Inhalt gehostet wird, während einer Kommunikationssitzung ausgetauscht werden, die mit dem Ursprungsserver (12) aufgebaut wurde, der dem Inhalt zugeordnet ist, und während der der Inhalt an den Cache-Server geliefert wird,
in einer zweiten Phase:
- eine vom Endgerät (10) gesendeten Anfrage zum Zugriff auf den Inhalt zu empfangen (E7),
- als Antwort auf die Anfrage zum Zugriff auf den Inhalt, mit dem Endgerät (10) die gespeicherte Sequenz von Nachrichten erneut wiederzugeben, was zur Lieferung des Inhalts führt.

15. Endgerät (10), das den Zugriff auf einen Inhalt anfordert und Mittel für Folgendes aufweist:
- Senden einer Anfrage zum Zugriff auf den Inhalt an einen Cache-Server (13), auf dem der Inhalt gespeichert ist,
- erneutes Wiedergeben, mit dem Cache-Server (13), einer Sequenz von Nachrichten, die zwischen dem Cache-Server (13) und einem sogenannten Ursprungsserver (12) ausgetauscht werden, der dem Inhalt während einer Kommunikationssitzung zugeordnet wird, die zwischen dem Cache-Server (13) und dem Ursprungsserver (12) aufgebaut wurde und während der der Inhalt an den Cache-Server (13) geliefert wird, wobei die Sequenz von Nachrichten vom Cache-Server (13) gespeichert wurde, was zur Lieferung des Inhalts an das Endgerät (10) führt.

## Claims

1. Method for delivering at least one content to at least one terminal (10), said method being implemented by a server, referred to as cache server (13), able to be accessed by said at least one terminal (10), and comprising:
a first phase during which the following steps are implemented:
- recording (E4) a sequence of messages exchanged between the cache server (13) and a server, referred to as originating server (12), hosting the content during a communication session established with the originating server (12) associated with said content and during which said content is delivered to the cache server,
a second phase during which the following steps are implemented:
- receiving (E6) a request to access said content sent by the terminal (10),
- in response to said request to access said content, replaying (E16, E16', E17, E17'), with said at least one terminal (10), the recorded message sequence, resulting in the delivery of said content.

2. Method for delivering at least one content to at least one terminal (10) according to Claim 1, comprising, following the reception (E6) of a request to access said content, transmitting (E7), to the terminal (10), a message comprising at least one parameter, referred to as delegation parameter, relating to authorization for delivery of said content by said cache server (13).

3. Method for delivering at least one content to at least one terminal (10) according to Claim 1, wherein a portion of the messages exchanged between the cache server (13) and the originating server (12) comprise information relating to the signalling and/or control of said recorded message sequence.

4. Method for delivering at least one content to at least one terminal (10) according to Claim 3, comprising a step (E15, E17) of modifying at least one of the messages of said recorded message sequence by way of said information relating to the signalling and/or control of said recorded message sequence.

5. Method for delivering at least one content to at least one terminal according to Claim 3, comprising a step (E14') of sending additional information relating to the signalling and/or control of said recorded message sequence to the terminal.

6. Method for delivering at least one content to at least one terminal (10) according to Claim 4, wherein the step of modifying (E15, E17) at least one of the messages of the recorded sequence is triggered by the reception of a replay request (E11) sent by the terminal (10).

7. Method for delivering at least one content to at least one terminal (10) according to Claim 2, comprising, prior to the step (E7) of transmitting the delegation parameter, a step (E1) of receiving a message comprising the delegation parameter.

8. Method for accessing a content, said method being implemented by a terminal (10) and comprising the following steps:
- sending (E6) a request to access said content to a cache server (13),
- replaying (E16, E16', E17, E17'), with said cache server (13), a sequence of messages exchanged between the cache server (13) and a server, referred to as originating server (12), associated with said content during a communication session established between the cache server (13) and the originating server (12), during which said content is delivered to the cache server (13), said message sequence having been recorded by said cache server (13), resulting in the delivery of said content to the terminal (10).

9. Method for accessing a content according to Claim 8, comprising, prior to the replaying step, a step (E7) of receiving a message, sent by a server, referred to as cache server (13), comprising at least one parameter, referred to as delegation parameter, relating to an authorization for execution, by said cache server (13), of a function for delivering said content.

10. Method for accessing a content according to Claim 8, wherein a portion of the messages exchanged between the cache server (13) and the originating server (12) comprise information relating to the signalling and/or control of said recorded message sequence.

11. Method for accessing a content according to Claim 10, comprising a step of receiving additional information relating to the signalling and/or control of said recorded message sequence (E14').

12. Method for accessing a content according to Claim 10, comprising a step (E15', E17') of modifying at least one of the messages of said recorded message sequence by way of said information relating to the signalling and/or control of said recorded message sequence.

13. Method for accessing a content according to Claim 9, comprising a phase of verifying the authenticity of said delegation parameter comprising:
- sending (E8) a request for information relating to said cache server (13) to a naming identifier resolver (11),
- receiving (E9) a message comprising a cryptographic key associated with the originating server (12) associated with said content and the delegation parameter,
- verifying (E10) the delegation parameter transmitted by the cache server (13) by way of the cryptographic key and the delegation parameter transmitted by the naming identifier resolver (11).

14. Cache server (13) able to be accessed by at least one terminal (10), said server hosting data (10) being authorized to deliver at least one content to the terminal (10), the cache server (13) comprising means for:
during a first phase:
- recording a sequence of messages exchanged between the cache server (13) and an originating server (12) hosting the content during a communication session established with the originating server (12) associated with said content and during which said content is delivered to the cache server,
during a second phase:
- receiving (E7) a request to access said content sent by the terminal (10),
- in response to said request to access said content, replaying, with said terminal (10), the recorded message sequence, resulting in the delivery of said content.

15. Terminal (10) requesting access to a content, and comprising means for:
- sending a request to access said content to a cache server (13) in which said content is stored,
- replaying, with said cache server (13), a sequence of messages exchanged between the cache server (13) and a server, referred to as originating server (12), associated with said content during a communication session established between the cache server (13) and the originating server (12), during which said content is delivered to the cache server (13), said message sequence having been recorded by said cache server (13), resulting in the delivery of said content to the terminal (10).
